# EUROPÄISCHE PATENTSCHRIFT

(11) **EP 0 604 847 B1**
(45) Veröffentlichungstag und Bekanntmachung des Hinweises auf die Patenterteilung: **06.12.1995**
(21) Anmeldenummer: 93120313.7
(22) Anmeldetag: 16.12.1993
(51) Int. Cl.: C08G 77/06, C08G 77/02

(54) **Verfahren zur Herstellung von Organopolysiloxanharz**
Process for preparing polyorganosiloxane resins
Procédé de préparation de résines d'organopolysiloxane

(30) Priorität: 23.12.1992 DE 4243895
(43) Veröffentlichungstag der Anmeldung: 06.07.1994
(73) Patentinhaber: Wacker-Chemie GmbH, 81737 München (DE)
(72) Erfinder: Geck, Michael, Dr., D-84489 Burghausen (DE); Herzig, Christian, Dr-, D-83373 Taching (DE); Deubzer, Bernward, Dr., D-84489 Burghausen (DE); Oswaldbauer, Helmut, D-94166 Stubenberg/Fürstberg (DE)

(56) Entgegenhaltungen:
- EP-A- 0 294 277
- EP-A- 0 535 687
- WO-A-93/23455
- US-A- 4 218 354
- US-A- 4 605 446
- US-A- 5 070 175

## Beschreibung

Die Erfindung betrifft ein Verfahren zur Herstellung von Organopolysiloxanharz durch Hydrolyse und Kondensation von Silanen und/oder deren (Teil-)Hydrolysaten.

Verfahren zur Herstellung von Organopolysiloxanharz sind bereits bekannt. Beispielsweise wird in US 4,707,531 (Toray Silicone Co., Ltd.; ausgegeben am 17. November 1987) ein Verfahren zur Herstellung von Organopolysiloxanharzen beschrieben, wobei Alkoxysilan zu einer Mischung aus Disiloxan und/oder Trialkylsilan und wäßriger Chlorwasserstoffsäure, die mindestens 5 Gewichtsprozent Chlorwasserstoff enthält, dosiert wird. Die Verwendung großer Mengen an Chlorwasserstoff ermöglicht hier die Kontrolle des Molekulargewichts des Harzes durch die Wahl des Verhältnisses der molaren Anteile von monofunktionellen Einheiten zu tetrafunktionellen Einheiten. In EP-A-0 249 277 wird ein Verfahren zur Herstellung von Organopolysiloxanharz durch Hydrolyse und Kondensation von Silanen beschrieben, wobei nach der Hydrolyse in Gegenwart von Säure die Reaktionsmasse neutralisiert wird. In US 5,070,175 (Shin-Etsu Chemical Co., Ltd.; ausgegeben am 3. Dezember 1991) wird ein Verfahren zur Herstellung eines Organopolysiloxans mit tetrafunktionellen Siloxaneinheiten durch Erhitzen einer Mischung aus Alkylsilikat und Organosilan oder oligomerer Organosiloxanverbindung in Gegenwart von Wasser und einem Sulfonsäuregruppen enthaltenden Katalysator in einem geschlossenen Reaktionsgefäß auf eine Temperatur, die um mindestens 10°C über dem Siedepunkt der Mischung bei Normaldruck liegt, beschrieben. Des weiteren wird in der deutschen Patentanmeldung mit dem Aktenzeichen P 4216139.8 (Wacker-Chemie GmbH; angemeldet am 15. Mai 1992) ein Verfahren zur Herstellung von Organopolysiloxanharz durch saure Hydrolyse von Silanen bzw. deren teilweiser Hydrolysate und basische Nachbehandlung in Anwesenheit von in Wasser unlöslichem organischen Lösungsmittel beschrieben.

Es bestand die Aufgabe, ein Verfahren bereitzustellen, mit dem Organopolysiloxanharze auf einfache Weise, gut reproduzierbar und mit hohen Raum-Zeit-Ausbeuten hergestellt werden können.

Gegenstand der Erfindung ist ein Verfahren zur Herstellung von Organopolysiloxanharz, dadurch gekennzeichnet, daß
in einer 1. Stufe
mindestens ein Silan der Formel

RₐSi(OR¹)₄₋ₐ (I),

wobei
- a: 0, 1, 2 oder 3 ist,
- R: gleich oder verschieden sein kann und einen einwertigen organischen Rest bedeutet und
- R¹: gleich oder verschieden sein kann und einen einwertigen organischen Rest bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird, sowie gegebenenfalls Organo(poly)siloxan ausgewählt aus der Gruppe bestehend aus

R²₃Si-O-SiR²₃ (II),

wobei R² gleich oder verschieden sein kann und eine für R angegebene Bedeutung hat,

(R³₂SiO)_{b} (III),

wobei R³ gleich oder verschieden sein kann und eine für R angegebene Bedeutung hat und b eine ganze Zahl im Wert von 3 bis 8, vorzugsweise 4 oder 5, ist, sowie deren Gemische mit Wasser in Gegenwart von mehrprotoniger Säure sowie gegebenenfalls weiteren Stoffen umgesetzt werden, wobei der pH-Wert 0 bis 3 beträgt, anschließend durch Basenzugabe die Säure zum Teil neutralisiert wird, wobei der pH-Wert 3,0 bis 6,5 beträgt, und dann die entstandene Verbindung R¹OH zumindest zum Teil abdestilliert wird,
in einer 2. Stufe
die in der 1. Stufe erhaltene homogene Reaktionsmasse in Anwesenheit von Base sowie wasserunlöslichem organischen Lösungsmittel, dessen Löslichkeit bei Raumtemperatur und dem Druck der umgebenden Atmosphäre maximal 1 g Lösungsmittel pro Liter Wasser beträgt, umgesetzt wird und Wasser sowie Verbindung R¹OH abdestilliert werden,
gegebenenfalls in einer 3. Stufe
die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung R¹OH abdestilliert werden und das ausgefallene Salz abfiltriert wird sowie
gegebenenfalls in einer 4. Stufe
die in der 3. Stufe erhaltene homogene Reaktionsmasse von wasserunlöslichem organischen Lösungsmittel befreit wird.

Im Rahmen der vorliegenden Erfindung soll sich der Begriff "homogene Reaktionsmasse" auf die flüssige Phase beziehen und bei der Neutralisation entstandenes Salz unberücksichtigt lassen.

Bei dem Rest R handelt es sich vorzugsweise um einen einwertigen Kohlenwasserstoffrest mit 1 bis 18 Kohlenstoffatom(en), der gegenüber Wasser inerte Substituenten aufweisen kann.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest und Reste der Formel 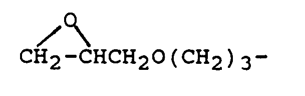
und HOCH₂CH(OH)CH₂SCH₂CH₂-.

Bei dem Rest R handelt es sich besonders bevorzugt um den Methyl-, n-Propyl-, Vinyl-, n-5-Hexenyl-, 3-Norbornenyl-, Phenyl- und Tolylrest, insbesondere um den Methyl- und den Vinylrest.

Beispiele für Rest R¹ sind die für R angegebenen Beispiele.

Bei dem Rest R¹ handelt es sich bevorzugt um Alkylgruppen mit 1 bis 6 Kohlenstoffatom(en), welche mit Alkyloxygruppen oder Hydroxygruppen substituiert sein können.

Bei dem Rest R¹ handelt es sich besonders bevorzugt um den Methyl-, Ethyl-, n-Propyl-, iso-Propyl- und Hexylrest, insbesondere um den Methyl- und Ethylrest.

Beispiele für Rest R² sind die für R angegebenen Beispiele.

Bei dem Rest R² handelt es sich bevorzugt um Methyl-, Ethyl-, Vinyl-, n-5-Hexenyl-, 3-Norbornenyl- und Phenylreste, wobei Methyl- und Vinylreste besonders bevorzugt sind.

Beispiele für Rest R³ sind die für R angegebenen Beispiele.

Bei dem Rest R³ handelt es sich bevorzugt um den Methyl-, Vinyl- und Phenylrest, wobei der Methylrest besonders bevorzugt ist.

Falls bei dem erfindungsgemäßen Verfahren Teilhydrolysate von Silanen der allgemeinen Formel (I) eingesetzt werden, sind solche mit durchschnittlich bis zu 15 Siliciumatomen pro Molekül bevorzugt.

Beispiele für die im erfindungsgemäßen Verfahren eingesetzten Silane der Formel (I) sind Tetramethoxysilan, Tetraethoxysilan, Tetra-n-propoxysilan, Methyltrimethoxysilan, Vinyltrimethoxysilan, 3-Mercaptopropyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, Vinyltriethoxysilan, 3-Mercaptopropyltriethoxysilan, 3-Chlorpropyltriethoxysilan, Phenyltriethoxysilan, o,m,p-Tolyltriethoxysilan, Propyltrimethoxysilan, Dimethyldiethoxysilan, Dimethyldimethoxysilan und Trimethylethoxysilan, wobei Tetraethoxysilan, Methyltrimethoxysilan, Methyltriethoxysilan, Phenyltriethoxysilan, o,m,p-Tolyltriethoxysilan und Propyltriethoxysilan und/oder deren Teilhydrolysate bevorzugt und Tetraethoxysilan und/oder dessen Teilhydrolysat besonders bevorzugt eingesetzt werden.

Beispiele für die im erfindungsgemäßen Verfahren gegebenenfalls eingesetzten Organo(poly)siloxane der Formel (II) sind Hexamethyldisiloxan, 1,3-Diphenyltetramethyldisiloxan, 1,3-Bis(n-5-hexenyl)tetramethyldisiloxan, 1,3-Divinyltetramethyldisiloxan, wobei Hexamethyldisiloxan und 1,3-Divinyltetramethyldisiloxan bevorzugt und Hexamethyldisiloxan besonders bevorzugt sind.

Beispiele für die im erfindungsgemäßen Verfahren gegebenenfalls eingesetzten Organo(poly)siloxane der Formel (III) sind Hexamethylcyclotrisiloxan, Octamethylcyclotetrasiloxan und Dekamethylcyclopentasiloxan.

Vorteilhafterweise wird in der 1. Stufe des erfindungsgemäßen Verfahrens ein Gemisch aus Organo(poly)siloxan der Formel (II), insbesondere solches mit R² gleich Methyl- oder Vinylrest, und Silan der Formel (I) mit a gleich 0 und/oder dessen Teilhydrolysat im Molverhältnis monofunktioneller zu tetrafunktioneller Einheiten von bevorzugt 0,5:1 bis 1,0:1,0, besonders bevorzugt 0,6:1 bis 0,9:1, eingesetzt.

Bei dem erfindungsgemäßen Verfahren wird in der 1. Stufe Silan der Formel (I) und/oder dessen Teilhydrolysat gegebenenfalls im Gemisch mit Organo(poly)siloxan der Formel (II) und/oder (III) mit Wasser und mehrprotoniger Säure sowie gegebenenfalls weiteren Stoffen zur Reaktion gebracht. Anschließend wird zu der homogenen Reaktionsmasse Base vorzugsweise in einer solchen Menge gegeben, daß im Falle einer zweiprotonigen Säure mehr als 50 Gewichtsprozent aber weniger als 100 Gewichtsprozent, im Falle einer dreiprotonigen Säure mindestens 34 Gewichtsprozent aber weniger als 66 Gewichtsprozent an eingesetzter Säure neutralisiert werden. Dann wird die bei der Hydrolyse entstandene Verbindung R¹OH mit R¹ gleich der obengenannten Bedeutung destillativ ganz oder teilweise entfernt.

Bei der 1. Stufe des erfindungsgemäßen Verfahrens wird Wasser in Mengen von vorzugsweise 10 bis 30 Gewichtsprozent, besonders bevorzugt 10 bis 20 Gewichtsprozent, jeweils bezogen auf das Gesamtgewicht der Reaktionsmasse der 1. Stufe vor der Destillation, eingesetzt.

Beispiele für die in der 1. Stufe des erfindungsgemäßen Verfahrens eingesetzten mehrprotonigen Säuren sind anorganische Säuren, wie H₂SO₄, H₂SeO₄, H₃PO₄ und H₃PO₃, sowie organische Säuren, wie Oxalsäure, Maleinsäure und Malonsäure, wobei H₂SO₄ und H₃PO₄ bevorzugt und H₂SO₄ besonders bevorzugt eingesetzt werden.

In der 1. Stufe des erfindungsgemäßen Verfahrens wird mehrprotonige Säure in Mengen von vorzugsweise 10 ppm (parts per million) bis 10 000 ppm, besonders bevorzugt von 100 ppm bis 5 000 ppm, jeweils bezogen auf das Gesamtgewicht der Reaktionsmasse der 1. Stufe vor der Destillation, eingesetzt.

Vorzugsweise liegt der pH-Wert der Reaktionsmasse in der 1. Stufe des erfindungsgemäßen Verfahrens vor der Basenzugabe im Bereich von 0 bis 3, besonders bevorzugt im Bereich von 1 bis 2.

Zusätzlich können in der 1. Stufe des erfindungsgemäßen Verfahrens bis zu vorzugsweise 0,01 Gewichtsprozent, bezogen auf das Gesamtgewicht der Reaktionsmasse der 1. Stufe vor der Destillation, weitere Stoffe eingesetzt werden, wie zum Beispiel Polymerisationsinhibitoren, die die Homopolymerisation von olefinischen Einsatzstoffen, wie beispielsweise 1,3-Bis-(n-5-hexenyl)tetramethyldisiloxan, verhindern sollen.

Beispiele für gegebenenfalls eingesetzte Polymerisationsinhibitoren sind Hydrochinon, 4-Methoxyphenol, Brenzkatechin und BHT (2,6-Di-t-butyl-4-methylphenol).

Vorzugsweise wird in der 1. Stufe des erfindungsgemäßen Verfahrens vor der destillativen Entfernung der entstandenen Verbindung R¹OH mit R¹ gleich der obengenannten Bedeutung so viel Base zugegeben, daß der pH-Wert im Bereich von 3,0 bis 6,5, besonders bevorzugt im Bereich von 4,0 bis 6,0, liegt.

Beispiele für Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, und Ammoniumverbindungen, wie etwa Tetramethylammoniumhydroxid, Tetra-n-butylammoniumhydroxid und Benzyltrimethylammoniumhydroxid, wobei Natriumhydroxid, Kaliumhydroxid, Methylamin, Ethylamin, Diethylamin und Benzyltrimethylammoniumhydroxid bevorzugt und Natriumhydroxid, Kaliumhydroxid und Methylamin besonders bevorzugt sind.

Falls erwünscht, kann die Base im Gemisch mit Wasser und/oder einem polaren, wasserlöslichen organischen Lösungsmittel zugegeben werden. Die Verdünnung der Base darf jedoch nicht so hoch sein, daß die Basenzugabe zu einer Ausfällung des entstandenen Organopolysiloxanharzes führt.

Vorzugsweise wird in der 1. Stufe des erfindungsgemäßen Verfahrens nach der Basenzugabe Verbindung R¹OH mit R¹ gleich der obengenannten Bedeutung in dem Maße abdestilliert, daß die Reaktionsmasse homogen bleibt. Vorzugsweise wird bis zu 90 Gewichtsprozent Verbindung R¹OH, bezogen auf das Gesamtgewicht an entstandener Verbindung R¹OH mit R¹ gleich der obengenannten Bedeutung, destillativ entfernt.

Die Umsetzung der 1. Stufe des erfindungsgemäßen Verfahrens wird vorzugsweise bei einer Temperatur von 20°C bis zur Siedetemperatur der Reaktionsmasse, besonders bevorzugt bei 60°C bis zur Siedetemperatur der Reaktionsmasse, und dem Druck der umgebenden Atmosphäre, d.h. einem Druck zwischen 900 und 1100 hPa, durchgeführt. Die Destillation der Verbindung R¹OH mit R¹ gleich der obengenannten Bedeutung erfolgt vorzugsweise bei der Siedetemperatur der Reaktionsmasse und dem Druck der umgebenden Atmosphäre.

Nach Beendigung der 1. Stufe des erfindungsgemäßen Verfahrens wird die homogene Reaktionsmasse mit wasserunlöslichem organischen Lösungsmittel, mindestens einer solchen Mengen an Base, die zur Erreichung einer basisch reagierenden Reaktionsmasse erforderlich ist, sowie gegebenenfalls weiteren Stoffen versetzt und reagieren gelassen.

Vorzugsweise wird in der 2. Stufe des erfindungsgemäßen Verfahrens soviel Base zugegeben, daß der pH-Wert im Bereich von 8,0 bis 14,0, bevorzugt von 9,0 bis 13,0, liegt. Es handelt sich dabei je nach eingesetzter Base im allgemeinen um Basenmengen im Bereich von 0,05 bis 1,0 Gewichtsprozent, bezogen auf das Gesamtgewicht der Reaktionsmasse der 2. Stufe vor der Destillation.

Als Basen können in der 2. Stufe des erfindungsgemäßen Verfahrens alle Basen eingesetzt werden, die auch in der 1. Stufe eingesetzt werden können, wobei vorzugsweise die gleiche Base wie in der 1. Stufe eingesetzt wird.

Falls erwünscht, kann die Base im Gemisch mit Wasser und/oder einem polaren, wasserlöslichen organischen Lösungsmittel zugegeben werden. Die Verdünnung der Base darf jedoch nicht so hoch sein, daß die Basenzugabe zu einer Ausfällung des entstandenen Organopolysiloxanharzes führt.

Unter dem Begriff wasserunlösliche organische Lösungsmittel sollen im folgenden organische Lösungsmittel verstanden werden, deren Löslichkeit bei Raumtemperatur und dem Druck der umgebenden Atmosphäre maximal 1 g Lösungsmittel pro Liter Wasser beträgt.

Beispiele für wasserunlösliche organische Lösungsmittel sind Kohlenwasserstoffe, die mit Wasser ein niedrig siedendes Azeotrop bilden, wie Cyclohexan, Methylcyclohexan, Benzol, Toluol, o,m,p-Xylol und Mesitylen, wobei Cyclohexan und Methylcyclohexan bevorzugt und Cyclohexan besonders bevorzugt sind.

Das in der 2. Stufe des erfindungsgemäßen Verfahrens eingesetzte wasserunlösliche organische Lösungsmittel wird mindestens in einer solchen Menge verwendet, die zur Erhaltung einer homogenen Reaktionsmasse ausreicht. Besonders bevorzugt werden dabei so viel Volumenteile an wasserunlöslichem organischen Lösungsmittel zugegeben, wie Alkohol und gegebenenfalls Wasser in der 1. Stufe abdestilliert wurden.

Beispiele für die in der 2. Stufe gegebenenfalls eingesetzten weiteren Stoffe sind Silane der Formel (I), in denen die Reste R ganz oder zum Teil die Bedeutung von säureempfindlichen organischen Resten haben, wie beispielsweise 3-Aminopropyl-, N-(2-Aminoethyl)-3-aminopropyl- sowie Aminophenylreste.

Die 2. Stufe des erfindungsgemäßen Verfahrens wird vorzugsweise bei einer Temperatur zwischen 50°C und der Siedetemperatur der Reaktionsmasse, besonders bevorzugt zwischen 60°C und der Siedetemperatur der Reaktionsmasse, und einem Druck der umgebenden Atmosphäre durchgeführt.

Bei der in der 2. Stufe des erfindungsgemäßen Verfahrens durchgeführten azeotropen Destillation werden das in der Reaktionsmischung enthaltene Wasser sowie die restliche Verbindung R¹OH mit R¹ gleich der obengenannten Bedeutung vollständig bzw. nahezu vollständig entfernt.

Mit der in der 2. Stufe des erfindungsgemäßen Verfahrens durchgeführten Destillation wird vorteilhafterweise sofort nach der Basenzugabe begonnen. Die Destillation ist zur Erzielung eines Organopolysiloxanharzes mit hohem durchschnittlichen Molekulargewicht, welches Hydroxyl- bzw. R¹O-Gruppen nur in einem geringen Maße aufweist, notwendig.

Nach Beendigung der 2. Stufe des erfindungsgemäßen Verfahrens wird vorzugsweise die homogene Reaktionsmasse durch Zusatz einer mehrprotonigen Säure und/oder deren Salze durch Pufferung auf einen pH-Wert zwischen 6 und 8, bevorzugt 7, eingestellt, Wasser und gegebenenfalls noch vorhandene Verbindung R¹OH mit R¹ gleich der obengenannten Bedeutung abdestilliert und das ausgefallene Salz abfiltriert, wobei - falls erwünscht - bereits vor der Filtration ein Teil des wasserunlöslichen organischen Lösungsmittels abdestilliert werden kann. Vorzugsweise wird vor der Filtration das wasserunlösliche organische Lösungsmittel in einer solchen Menge abdestilliert, daß ein Organopolysiloxanharzkonzentrat mit einem Gehalt an Organopolysiloxanharz von 50 bis 80 Gewichtsprozent, besonders bevorzugt 55 bis 70 Gewichtsprozent, resultiert.

Bei der 3. Stufe des erfindungsgemäßen Verfahrens werden als mehrprotonige Säure bzw. deren Salze vorzugsweise Phosphorsäure, Alkalidihydrogenphosphate, Gemische aus Phosphorsäure und Alkaliorthophosphaten, Gemische aus Alkalidihydrogenphosphaten und Dialkalihydrogenphosphaten sowie Gemische aus Alkalidihydrogenphosphaten und Alkaliorthophosphaten eingesetzt, wobei Phosphorsäure, Natriumdihydrogenphosphat und ein Gemisch aus Phosphorsäure und Natriumorthophosphat besonders bevorzugt sind.

Falls erwünscht können in der 3. Stufe des erfindungsgemäßen Verfahrens die mehrbasige Säure und/oder deren Salze in Form von wäßrigen Lösungen eingesetzt werden.

Die 3. Stufe des erfindungsgemäßen Verfahrens wird vorzugsweise bei einer Temperatur zwischen 50°C und der Siedetemperatur der Reaktionsmasse, besonders bevorzugt zwischen 60°C und der Siedetemperatur der Reaktionsmasse, und einem Druck der umgebenden Atmosphäre durchgeführt.

Nach Beendigung der 3. Stufe wird die erhaltene, wasserunlösliches organisches Lösungsmittel enthaltende Reaktionsmasse gegebenenfalls in einer 4. Stufe vom wasserunlöslichen organischen Lösungsmittel befreit.

Eine bevorzugte Ausführungsform des erfindungsgemäßen Verfahrens zur Herstellung von Organopolysiloxanharz besteht darin, daß
in einer 1. Stufe
mindestens ein Silan der Formel

RₐSi(OR¹)₄₋ₐ (I),

wobei
- a: 0, 1, 2 oder 3 ist,
- R: gleich oder verschieden sein kann und einen einwertigen organischen Rest bedeutet und
- R¹: gleich oder verschieden sein kann und einen einwertigen organischen Rest bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird,
sowie gegebenenfalls Organo(poly)siloxan ausgewählt aus der Gruppe bestehend aus

R²₃Si-O-SiR²₃ (II),

wobei R² gleich oder verschieden sein kann und eine für R angegebene Bedeutung hat,

(R³₂SiO)_{b} (III),

wobei R³ gleich oder verschieden sein kann und eine für R angegebene Bedeutung hat und b eine ganze Zahl im Wert von 3 bis 8, vorzugsweise 4 oder 5, ist, sowie deren Gemische mit Wasser in Gegenwart von mehrprotoniger Säure sowie gegebenenfalls weiteren Stoffen umgesetzt werden, anschließend durch Basenzugabe die Säure zum Teil neutralisiert wird und dann die entstandene Verbindung R¹OH zumindest zum Teil abdestilliert wird,
in einer 2. Stufe
die in der 1. Stufe erhaltene homogene Reaktionsmasse in Anwesenheit von Base sowie wasserunlöslichem organischen Lösungsmittel umgesetzt wird und Wasser sowie Verbindung R¹OH abdestilliert werden,
in einer 3. Stufe
die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung R¹OH abdestilliert werden und das ausgefallene Salz abfiltriert wird sowie
gegebenenfalls in einer 4. Stufe
die in der 3. Stufe erhaltene homogene Reaktionsmasse von wasserunlöslichem organischen Lösungsmittel befreit wird.

Nach einer besonders bevorzugten Ausführungsform des erfindungsgemäßen Verfahrens wird Silan der Formel (I) mit a gleich 0, insbesondere Tetraethoxysilan, und/oder dessen Teilhydrolysat und Organo(poly)siloxan der Formel (II) in einer 1. Stufe mit Wasser und mehrbasiger Säure, insbesondere Schwefelsäure, vermischt, erst bei 60°C, dann bei der Siedetemperatur der Reaktionsmasse, im Fall von Tetraethoxysilan und/oder dessen Teilhydrolysat 78°C, und einem Druck zwischen 900 und 1100 hPa umgesetzt, die erhaltene Reaktionsmasse mit Base zum Teil neutralisiert, und die Verbindung R¹OH weitgehend destillativ entfernt,
in einer 2. Stufe die in der 1. Stufe erhaltene Reaktionsmasse in Anwesenheit von Base und einem wasserunlöslichen organischen Lösungsmittel, insbesondere Cyclohexan oder Methylcyclohexan, umgesetzt, gleichzeitig Wasser und Verbindung R¹OH bei dem Druck der umgebenden Atmosphäre azeotrop abdestilliert bis die Siedetemperatur des organischen Lösungsmittels erreicht ist, in einer 3. Stufe die in der 2. Stufe erhaltene basische Reaktionsmasse bei 60°C und einem Druck der umgebenden Atmosphäre mit Phosphatpuffer auf einen pH-Wert zwischen 6 und 8 eingestellt, Wasser und gegebenenfalls noch vorhandene Verbindung R¹OH azeotrop abdestilliert und das ausgefallene Salz abfiltriert, wobei R¹ die obengenannte Bedeutung hat, sowie in einer 4. Stufe gegebenenfalls das wasserunlösliche organische Lösungsmittel entfernt.

Bei dem erfindungsgemäßen Verfahren kann es sich bei den einzelnen Komponenten jeweils um eine Art dieser Komponente wie auch um ein Gemisch aus mindestens zwei Arten dieser Komponente handeln.

Beispiele für die erfindungsgemäß hergestellten Organopolysiloxanharze sind [Me₃SiO_{1/2}]ₓ[SiO_{4/2}]_{y} mit Me gleich Methylrest und einem Verhältnis von x:y von 0,6 : 1 bis 0,9 : 1 sowie
[Me₃SiO_{1/2}]ₓ[Me₂ViSiO_{1/2}]_{y}[SiO_{4/2}]_{z} mit Me gleich Methylrest, Vi gleich Vinylrest und einem Verhältnis von (x+y):z von 0,6 : 1 bis 0,9 : 1 und einem Verhältnis von x:y von 98:2 bis 80:20.

Das erfindungsgemäße Organopolysiloxanharz hat ein durchschnittliches Molekulargewicht von vorzugsweise 2000 bis 20000 g/mol und weist durchschnittlich höchstens bis zu 5 Molprozent Reste -OR¹ mit R¹ gleich der obengenannten Bedeutung, bezogen die Gesamtzahl der Siliciumatome pro Harzmolekül, auf. Ist das Organopolysiloxanharz aus Silan der Formel (I) mit a gleich 0 und Organo(poly)siloxan der Formel (II) hergestellt, entspricht das stöchiometrische Verhältnis von tetrafunktionellen zu monofunktionellen Siloxaneinheiten im Harz den - bezogen auf Silicium - entsprechenden molaren Anteilen in den Ausgangsverbindungen.

Das erfindungsgemäß hergestellte Organopolysiloxanharz hat den Vorteil, daß es zumindest zum Teil, vorzugsweise jedoch ganz, in flüssigem Organopolysiloxan löslich ist.

Das erfindungsgemäße Verfahren hat den Vorteil, daß es sehr einfach in der Durchführung ist, sehr gut reproduzierbar ist und hohe Raum-Zeit-Ausbeuten liefert. Das verwendete wasserunlösliche organische Lösungsmittel kann auf einfache Weise rückgewonnen werden. Ein weiterer Vorteil besteht darin, daß bei dem erfindungsgemäßen Verfahren keine flüssig/flüssig-Phasentrennung durchgeführt wird und dadurch keine Ausbeuteverluste auftreten.

Nach dem erfindungsgemäßen Verfahren werden Organopolysiloxanharze mit einer großen Reinheit erhalten, die eine hohe Lagerstabilität besitzen und sich ausgezeichnet zu Produkten mit einer hohen Lagerstabilität weiterverarbeiten lassen.

Die erfindungsgemäßen Organopolysiloxanharze eignen sich für alle Anwendungen, für die auch bisher Organopolysiloxanharze eingesetzt werden konnten. So können die erfindungsgemäßen Organopolysiloxanharze beispielsweise als Schaumstabilisatoren, als Zusatz zu Antischaummitteln, Tonern, Lack- und anderen Beschichtungssystemen, wie etwa Papierbeschichtungsmassen, verwendet werden.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

Eine Mischung aus 340 g (2,1 Mol) Hexamethyldisiloxan, 56 g (0,3 Mol) 1,3-Divinyltetramethyldisiloxan, 900 g (entspricht 6,0 Mol SiO₂-Einheiten) Tetraethoxysilan mit einem 40 %igen SiO₂-Anteil (käuflich erhältlich unter der Bezeichnung TES 40 bei der Wacker-Chemie GmbH, München), 250 g Wasser und 16 g 10 %iger H₂SO₄ in Wasser wird für eine Dauer von 1 Stunde bei einer Temperatur von 60°C und anschließend für eine Dauer von 2 Stunden bei 78°C unter Rückfluß erhitzt. Das so erhaltene homogene Gemisch wird mit 10 g 10 %iger NaOH in Wasser versetzt und anschließend im Verlauf von einer Stunde 650 g Destillat abgenommen, das nach gaschromatographischer Analyse neben Ethanol und Wasser 0,8 % Hexamethyldisiloxan enthält. Das homogene Gemisch wird danach mit 800 ml Cyclohexan und 12 g 10 %iger NaOH in Wasser versetzt und anschließend während einer Dauer von 90 Minuten 160 g Wasser/Ethanolgemisch azeotrop abdestilliert. Das so erhaltene homogene Gemisch wird nun mit 5 g Phosphorsäure (85 %ig in Wasser) angesäuert, für eine Dauer von einer Stunde bei 60°C gerührt, anschließend mit 80 g 10 %iger Na₃PO₄·12H₂O-Lösung in Wasser versetzt und weitere 15 Minuten bei 60°C gerührt. Im Anschluß daran werden während einer Dauer von 1 Stunde 80 g Wasser/Ethanolgemisch azeotrop abdestilliert und weitere 200 ml Cyclohexan destillativ entfernt. Nach Abfiltrieren der ausgefallenenen Natriumsalze werden 1220 g einer 61 %igen, neutralen Harzlösung in Cyclohexan erhalten. Die ¹H- und ²⁹Si-NMR-spektroskopische Analyse des Organopolysiloxanharzes ergibt die Zusammensetzung

[Me₃SiO_{1/2}]_{0,7}[Me₂ViSiO_{1/2}]_{0,1}[SiO_{4/2}]

mit Me gleich Methylrest und Vi gleich Vinylrest. Das molare Verhältnis von monofunktionellen zu tetrafunktionellen Siloxaneinheiten von 0,8 sowie das molare Verhältnis von Trimethylsilyl- zu Vinyldimethylsilylendgruppen entspricht damit den molaren Anteilen der eingesetzten Edukte. Gemäß ²⁹Si-NMR-spektroskopischen Analysen befindet sich im erfindungsgemäß hergestellten Harzkonzentrat kein Hexamethyldisiloxan.

Der Restethoxygehalt im Organopolysiloxanharz beträgt 3,8 Molprozent, bezogen auf die Siliciumatome. Die Ausbeute an Organopolysiloxanharz beträgt 95 % der Theorie.

### Vergleichsbeispiel 1

Die in Beispiel 1 beschriebene Mischung wird für eine Dauer von 1 Stunde bei einer Temperatur von 60°C und anschließend für eine Dauer von 2 Stunden bei 78°C unter Rückfluß erhitzt. Dem so erhaltenen homogenen Gemisch wird ohne vorheriger Basenzugabe im Verlauf von einer Stunde 650 g Destillat abgenommen, das nach gaschromatographischer Analyse neben Ethanol und Wasser 2,3 % Hexamethyldisiloxan enthält. Des weiteren wird wie in Beispiel 1 beschrieben verfahren. Nach Abfiltrieren der ausgefallenenen Natriumsalze werden 1200 g einer 60 %igen, neutralen Harzlösung in Cyclohexan erhalten. Die ¹H- und ²⁹Si-NMR-spektroskopische Analyse des Organopolysiloxanharzes ergibt ein molares Verhältnis von monofunktionellen zu tetrafunktionellen Siloxaneinheiten von 0,7, das damit niedriger ist als das durch die eingesetzten Edukte vorgegebene molare Verhältnis mono- zu tetrafunktioneller Einheiten von 0,8. Gemäß ²⁹Si-NMR-spektroskopischen Analysen befindet sich im erfindungsgemäß hergestellten Harzkonzentrat freies Hexamethyldisiloxan.

Der Restethoxygehalt im Organopolysiloxanharz beträgt 3,6 Molprozent, bezogen auf die Siliciumatome.

### Vergleichsbeispiel 2

Zu 450 g Tetraethoxysilan mit einem 40 %igen SiO₂-Anteil (käuflich erhältlich unter der Bezeichnung TES 40 bei der Wacker-Chemie GmbH, München; entspricht 3,0 Mol SiO₂-Einheiten), 170 g (1,05 Mol) Hexamethyldisiloxan, 28 g (0,15 Mol) 1,3-Divinyltetramethyldisiloxan werden 100 g Wasser und 2 g 10 %ige HCl in Wasser gegeben, für eine Dauer von 2 Stunden bei einer Temperatur von 78°C unter Rückfluß erhitzt und anschließend während einer Dauer von 30 Minuten 235 g Destillat abgenommen. Zu dem homogenen Gemisch werden danach 150 ml Tetrahydrofuran und 4,0 g einer 40 %igen Lösung von Methylamin in Wasser (käuflich erhältlich bei der Fa. Merck, Darmstadt) gegeben und das ganze für eine Dauer von 3 Stunden bei 65°C unter Rückfluß erhitzt. Anschließend wird die so erhaltene homogene Reaktionsmasse unter kräftigem Rühren in 3 l Wasser gegeben, der entstandene Niederschlag abfiltriert und bei 110°C getrocknet. Die ¹H- und ²⁹Si-NMR-spektroskopische Analyse des Organopolysiloxanharzes ergibt ein molares Verhältnis von monofunktionellen zu tetrafunktionellen Siloxaneinheiten von 0,7, das damit niedriger ist als das durch die eingesetzten Edukte vorgegebene molare Verhältnis mono- zu tetrafunktioneller Einheiten von 0,8.

Der Restethoxygehalt im Organopolysiloxanharz beträgt 2,4 Molprozent, bezogen auf die Siliciumatome.

### Beispiel 2

Eine Mischung aus 340 g (2,1 Mol) Hexamethyldisiloxan, 900 g (entspricht 6,0 Mol SiO₂-Einheiten) Tetraethoxysilan mit einem 40 %igen SiO₂-Anteil (käuflich erhältlich unter der Bezeichnung TES 40 bei der Wacker-Chemie GmbH, München), 250 g Wasser und 16 g 10 %iger H₂SO₄ in Wasser wird für eine Dauer von 1 Stunde bei einer Temperatur von 60°C und anschließend für eine Dauer von 2 Stunden bei 78°C unter Rückfluß erhitzt. Das so erhaltene homogene Gemisch wird mit 10 g 10 %iger NaOH in Wasser versetzt und anschließend im Verlauf von einer Stunde 650 g Destillat abgenommen, das nach gaschromatographischer Analyse neben Ethanol und Wasser 0,8 % Hexamethyldisiloxan enthält. Das homogene Gemisch wird danach mit 800 ml Cyclohexan und 12 g 10 %iger NaOH in Wasser versetzt und anschließend während einer Dauer von 90 Minuten 160 g Wasser/Ethanolgemisch azeotrop abdestilliert. Das so erhaltene homogene Gemisch wird nun mit 5 g Phosphorsäure (85 %ig in Wasser) angesäuert, für eine Dauer von einer Stunde bei 60°C gerührt, anschließend mit 8 g festem Na₃PO₄·12H₂O versetzt und weitere 30 Minuten bei 60°C gerührt. Im Anschluß daran werden während einer Dauer von 15 Minuten 6 g Wasser/Ethanolgemisch azeotrop abdestilliert und weitere 200 ml Cyclohexan destillativ entfernt. Nach Abfiltrieren der ausgefallenenen Natriumsalze werden 1140 g einer 61 %igen, neutralen Harzlösung in Cyclohexan erhalten. Die ¹H- und ²⁹Si-NMR-spektroskopische Analyse des Organopolysiloxanharzes ergibt die Zusammensetzung

[Me₃SiO_{1/2}]_{0,7}[SiO_{4/2}]

mit Me gleich Methylrest.
Das molare Verhältnis von monofunktionellen zu tetrafunktionellen Siloxaneinheiten entspricht damit den molaren Anteilen der eingesetzten Edukte. Gemäß ²⁹Si-NMR-spektroskopischen Analysen befindet sich im erfindungsgemäß hergestellten Harzkonzentrat kein Hexamethyldisiloxan.

Der Restethoxygehalt im Organopolysiloxanharz beträgt 3,9 Molprozent, bezogen auf die Siliciumatome. Die Ausbeute an Organopolysiloxanharz beträgt 96 % der Theorie.

## Patentansprüche

1. Verfahren zur Herstellung von Organopolysiloxanharz, dadurch gekennzeichnet, daß
in einer 1. Stufe
mindestens ein Silan der Formel
RₐSi(OR¹)₄₋ₐ (I),
wobei
a 0, 1, 2 oder 3 ist,
R gleich oder verschieden sein kann und einen einwertigen organischen Rest bedeutet und
R¹ gleich oder verschieden sein kann und einen einwertigen organischen Rest bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird, sowie gegebenenfalls Organo(poly)siloxan ausgewählt aus der Gruppe bestehend aus
R²₃Si-O-SiR²₃ (II),
wobei R² gleich oder verschieden sein kann und eine für R angegebene Bedeutung hat,
(R³₂SiO)_{b} (III),
wobei R³ gleich oder verschieden sein kann und eine für R angegebene Bedeutung hat und b eine ganze Zahl im Wert von 3 bis 8 ist, sowie deren Gemische
mit Wasser in Gegenwart von mehrprotoniger Säure sowie gegebenenfalls weiteren Stoffen umgesetzt werden, wobei der pH-Wert 0 bis 3 beträgt, anschließend durch Basenzugabe die Säure zum Teil neutralisiert wird, wobei der pH-Wert 3,0 bis 6,5 beträgt, und dann die entstandene Verbindung R¹OH zumindest zum Teil abdestilliert wird,
in einer 2. Stufe
die in der 1. Stufe erhaltene homogene Reaktionsmasse in Anwesenheit von Base sowie wasserunlöslichem organischen Lösungsmittel, dessen Löslichkeit bei Raumtemperatur und dem Druck der umgebenden Atmosphäre maximal 1 g Lösungsmittel pro Liter Wasser beträgt, umgesetzt wird und Wasser sowie Verbindung R¹OH abdestilliert werden,
gegebenenfalls in einer 3. Stufe
die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung R¹OH abdestilliert werden und das ausgefallene Salz abfiltriert wird sowie
gegebenenfalls in einer 4. Stufe
die in der 3. Stufe erhaltene homogene Reaktionsmasse von wasserunlöslichem organischen Lösungsmittel befreit wird.

2. Verfahren nach Anspruch 1, dadurch gekennzeichnet, daß in der 1. Stufe als mehrprotonige Säure Schwefelsäure eingesetzt wird.

3. Verfahren nach Anspruch 1 oder 2, dadurch gekennzeichnet, daß in der 1. Stufe ein Gemisch aus Organo(poly)siloxan der Formel (II) und Silan der Formel (I) mit a gleich 0 und/oder dessen Teilhydrolysat eingesetzt wird.

4. Verfahren nach einem oder mehreren der Ansprüche 1 bis 3, dadurch gekennzeichnet, daß
in einer 1. Stufe
mindestens ein Silan der Formel
RₐSi(OR¹)₄₋ₐ (I),
wobei
a 0, 1, 2 oder 3 ist,
R gleich oder verschieden sein kann und einen einwertigen organischen Rest bedeutet und
R¹ gleich oder verschieden sein kann und einen einwertigen organischen Rest bedeutet,
und/oder dessen Teilhydrolysat, mit der Maßgabe, daß mindestens ein Silan der Formel (I) mit a gleich 0 oder 1 und/oder dessen Teilhydrolysat eingesetzt wird, sowie gegebenenfalls Organo(poly)siloxan ausgewählt aus der Gruppe bestehend aus
R²₃Si-O-SiR²₃ (II),
wobei R² gleich oder verschieden sein kann und eine für R angegebene Bedeutung hat,
(R³₂SiO)_{b} (III),
wobei R³ gleich oder verschieden sein kann und eine für R angegebene Bedeutung hat und b eine ganze Zahl im Wert von 3 bis 8 ist, sowie deren Gemische
mit Wasser in Gegenwart von mehrprotoniger Säure sowie gegebenenfalls weiteren Stoffen umgesetzt werden, anschließend durch Basenzugabe die Säure zum Teil neutralisiert wird und dann die entstandene Verbindung R¹OH zumindest zum Teil abdestilliert wird,
in einer 2. Stufe
die in der 1. Stufe erhaltene homogene Reaktionsmasse in Anwesenheit von Base sowie wasserunlöslichem organischen Lösungsmittel, dessen Löslichkeit bei Raumtemperatur und dem Druck der umgebenden Atmosphäre maximal 1 g Lösungsmittel pro Liter Wasser beträgt, umgesetzt wird und Wasser sowie Verbindung R¹OH abdestilliert werden,
in einer 3. Stufe
die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung R¹OH abdestilliert werden und das ausgefallene Salz abfiltriert wird sowie
gegebenenfalls in einer 4. Stufe
die in der 3. Stufe erhaltene homogene Reaktionsmasse von wasserunlöslichem organischen Lösungsmittel befreit wird.

5. Verfahren nach einem oder mehreren der Ansprüche 1 bis 4, dadurch gekennzeichnet, daß als wasserunlösliches organisches Lösungsmittel Cyclohexan oder Methylcyclohexan eingesetzt wird.

6. Verfahren nach einem oder mehreren der Ansprüche 1 bis 5, dadurch gekennzeichnet, daß in der 3. Stufe als mehrprotonige Säure bzw. deren Salze solche ausgewählt aus der Gruppe, bestehend aus Phosphorsäure, Natriumdihydrogenphosphat und einem Gemisch aus Phosphorsäure und Natriumorthophosphat, eingesetzt wird.

7. Verfahren nach einem oder mehreren der Ansprüche 1 bis 6, dadurch gekennzeichnet, daß Silan der Formel (I) mit a gleich 0 und/oder dessen Teilhydrolysat und Organo(poly)siloxan der Formel (II)
in einer 1. Stufe mit Wasser und mehrbasiger Säure vermischt wird, erst bei 60°C, dann bei der Siedetemperatur der Reaktionsmasse und einem Druck zwischen 900 und 1100 hPa umgesetzt wird, die erhaltene Reaktionsmasse mit Base zum Teil neutralisiert wird, und die Verbindung R¹OH weitgehend destillativ entfernt wird,
in einer 2. Stufe die in der 1. Stufe erhaltene Reaktionsmasse in Anwesenheit von Base und einem wasserunlöslichen organischen Lösungsmittel, dessen Löslichkeit bei Raumtemperatur und dem Druck der umgebenden Atmosphäre maximal 1 g Lösungsmittel pro Liter Wasser beträgt, umgesetzt wird, gleichzeitig Wasser und Verbindung R¹OH bei dem Druck der umgebenden Atmosphäre azeotrop abdestilliert werden bis die Siedetemperatur des organischen Lösungsmittels erreicht ist,
in einer 3. Stufe die in der 2. Stufe erhaltene basische Reaktionsmasse bei 60°C und einem Druck der umgebenden Atmosphäre mit Phosphatpuffer ein pH-Wert zwischen 6 und 8 eingestellt wird, Wasser und gegebenenfalls noch vorhandene Verbindung R¹OH azeotrop abdestilliert werden und das ausgefallene Salz abfiltriert wird, wobei R¹ die obengenannte Bedeutung hat, sowie
in einer 4. Stufe gegebenenfalls das wasserunlösliche organische Lösungsmittel entfernt wird.

## Claims

1. Process for the preparation of an organopolysiloxane resin, characterized in that
in a 1st stage
at least one silane of the formula
RₐSi(OR¹)₄₋ₐ (I)
in which
a is 0, 1, 2 or 3,
R can be identical or different and denotes a monovalent organic radical and
R¹ can be identical or different and denotes a monovalent organic radical,
and/or a partial hydrolysate thereof, with the proviso that at least one silane of the formula (I) where a is 0 or 1 and/or a partial hydrolysate thereof is employed, and, if appropriate, an organo(poly)siloxane chosen from the group comprising
R²₃Si-O-SiR²₃ (II)
in which R² can be identical or different and has one of the meanings given for R, and
(R³₂SiO)_{b} (III)
in which R³ can be identical or different and has one of the meanings given for R and b is an integer having a value from 3 to 8, or mixtures thereof, are reacted with water in the presence of a poly-proton acid and if appropriate further substances, at which point the pH is 0 to 3, the acid is subsequently partly neutralized by addition of a base, at which point the pH is 3.0 to 6.5, and at least some of the resulting compound R¹OH is then distilled off,
in a 2nd stage
the homogeneous reaction mass resulting from the 1st stage is reacted in the presence of a base and a water-insoluble organic solvent which has a solubility at room temperature under the pressure of the surrounding atmosphere of not more than 1 g of solvent per litre of water, and the water and the compound R¹OH are distilled off, if appropriate, in a 3rd stage
the homogeneous reaction mass resulting from the 2nd stage is brought to a pH of between 6 and 8 by buffering with a poly-proton acid and/or salts thereof, the water and any compound R¹OH still present are distilled off and the salt which has precipitated is filtered off, and if appropriate, in a 4th stage
the homogeneous reaction mass resulting from the 3rd stage is freed from the water-insoluble organic solvent.

2. Process according to Claim 1, characterized in that sulphuric acid is employed as the poly-proton acid in the 1st stage.

3. Process according to Claim 1 or 2, characterized in that a mixture of an organo(poly)siloxane of the formula (II) and a silane of the formula (I), where a is 0, and/or a partial hydrolysate thereof is employed in the 1st stage.

4. Process according to one or more of Claims 1 to 3, characterized in that
in a 1st stage
at least one silane of the formula
RₐSi(OR¹)₄₋ₐ (I)
in which
a is 0, 1, 2 or 3,
R can be identical or different and denotes a monovalent organic radical and
R¹ can be identical or different and denotes a monovalent organic radical,
and/or a partial hydrolysate thereof, with the proviso that at least one silane of the formula (I) where a is 0 or 1 and/or a partial hydrolysate thereof is employed, and if appropriate an organo(poly)siloxane chosen from the group comprising
R²₃-Si-O-SiR²₃ (II)
in which R² can be identical or different and has one of the meanings given for R, and
(R³₂SiO)_{b} (III)
in which R³ can be identical or different and has one of the meanings given for R and b is an integer having a value from 3 to 8, or mixtures thereof,
are reacted with water in the presence of a poly-proton acid and if appropriate other substances, the acid is then partly neutralized by addition of a base and the compound R¹OH formed is then at least partly distilled off,
in a 2nd stage
the homogeneous reaction mass resulting from the 1st stage is reacted in the presence of a base and a water-insoluble organic solvent which has a solubility at room temperature under the pressure of the surrounding atmosphere of not more than 1 g of solvent per litre of water and the water and the compound R¹OH are distilled off,
in a 3rd stage
the homogeneous reaction mass resulting from the 2nd stage is brought to a pH of between 6 and 8 by buffering with a poly-proton acid and/or salts thereof, the water and any compounds R¹OH still present are distilled off and the salt which has precipitated is filtered off and if appropriate, in a 4th stage
the homogeneous reaction mass resulting from the 3rd stage is freed from the water-insoluble organic solvent.

5. Process according to one or more of Claims 1 to 4, characterized in that cyclohexane or methylcyclohexane is employed as the water-insoluble organic solvent.

6. Process according to one or more of Claims 1 to 5, characterized in that the poly-proton acid or salts thereof employed in the 3rd stage are chosen from the group comprising phosphoric acid, sodium dihydrogen phosphate and a mixture of phosphoric acid and sodium orthophosphate.

7. Process according to one or more of Claims 1 to 6, characterized in that a silane of the formula (I) where a is 0 and/or a partial hydrolysate thereof and an organo(poly)siloxane of the formula (II)
in a 1st stage are mixed with water and a polybasic acid, the mixture is reacted first at 60°C and then at the boiling point of the reaction mass under a pressure of between 900 and 1100 hPa, the resulting reaction mass is partly neutralized with a base and the compound R¹OH is largely removed by distillation,
in a 2nd stage the reaction mass resulting from the 1st stage is reacted in the presence of a base and a water-insoluble organic solvent, which has a solubility at room temperature under the pressure of the surrounding atmosphere of not more than 1 g of solvent per litre of water, the water and the compound R¹OH are simultaneously distilled off azeotropically under the pressure of the surrounding atmosphere until the boiling point of the organic solvent is reached,
in a 3rd stage the basic reaction mass resulting from the 2nd stage is brought to a pH of between 6 and 8 with phosphate buffer at 60°C under a pressure of the surrounding atmosphere, water and any compound R¹OH still present are distilled off azeotropically and the salt which has precipitated is filtered off, R¹ having the abovementioned meaning, and
in a 4th stage the water-insoluble organic solvent is removed, if appropriate.

## Revendications

1. Procédé de préparation d'une résine organopolysiloxane, caractérisé en ce que,
dans une première étape, au moins un silane de formule :
RₐSi(OR¹)₄₋ₐ (I)
où :
a est 0, 1, 2 ou 3,
R peut être identique ou différent et représente un radical organique monovalent, et
R¹ peut être identique ou différent et représente un radical organique monovalent,
et/ou son hydrolysat partiel, avec la condition que l'on utilise au moins un silane de formule (I) avec a égal à 0 ou 1 et/ou son hydrolysat partiel,
ainsi que facultativement, un organo(poly)siloxane choisi parmi le groupe consistant en :
R²₃Si-O-SiR²₃ (II)
où R² peut être identique ou différent et a une signification donnée pour R,
(R³₂SiO)_{b} (III)
où R³ peut être identique ou différent et a une signification donnée pour R et b est un nombre entier de valeur 3 à 8, ainsi que leurs mélanges,
est mis à réagir avec de l'eau en présence d'un acide multiprotonique ainsi que facultativement, d'autres matières, où le pH atteint 0 à 3, ensuite l'acide est partiellement neutralisé par addition d'une base, où le pH atteint 3,0 à 6,5 et alors, le composé R¹OH obtenu est au moins partiellement séparé par distillation,
dans une deuxième étape, la masse réactionnelle homogène obtenue à l'étape 1 est mise à réagir en présence d'une base ainsi que d'un solvant organique insoluble dans l'eau, cette solubilité atteint au maximum 1 g de solvant par litre d'eau à température ambiante et à la pression de l'atmosphère ambiante et l'eau ainsi que le composé R¹OH sont séparés par distillation,
facultativement, dans une troisième étape, la masse réactionnelle homogène obtenue à l'étape 2 est amenée à un pH entre 6 et 8 par un acide multiprotonique et/ou son sel par tamponnage, l'eau et le composé R¹OH facultativement encore présent sont séparés par distillation et le sel précipité est séparé par filtration,
ainsi que facultativement, dans une quatrième étape, la masse réactionnelle homogène obtenue à l'étape 3 est libérée du solvant organique insoluble dans l'eau.

2. Procédé suivant la revendication 1, caractérisé en ce que l'on utilise, à l'étape 1, de l'acide sulfurique comme acide multiprotonique.

3. Procédé suivant la revendication 1 ou 2, caractérisé en ce que l'on utilise, à l'étape 1, un mélange d'organo(poly)siloxane de formule (II) et de silane de formule (I) avec a égal à 0 et/ou leur hydrolysat partiel.

4. Procédé suivant l'une ou plusieurs des revendications 1 à 3, caractérisé en ce que, à l'étape 1, au moins un silane de formule :
RₐSi(OR¹)₄₋ₐ (I)
où :
a est 0, 1, 2 ou 3,
R peut être identique ou différent et représente un radical organique monovalent, et
R¹ peut être identique ou différent et représente un radical organique monovalent,
et/ou son hydrolysat partiel, avec la condition que l'on utilise au moins un silane de formule (I) avec a égal à 0 ou 1 et/ou son hydrolysat partiel,
ainsi que facultativement, un organo(poly)siloxane choisi parmi le groupe consistant en :
R²₃Si-O-SiR²₃ (II)
où R² peut être identique ou différent et a une signification donnée pour R,
(R³₂SiO)_{b} (III)
où R³ peut être identique ou différent et a une signification donnée pour R et b est un nombre entier de valeur 3 à 8, ainsi que leurs mélanges,
est mis à réagir avec de l'eau en présence d'un acide multiprotonique ainsi que facultativement, d'autres matières, ensuite l'acide est partiellement neutralisé par addition d'une base et alors, le composé obtenu R¹OH est au moins partiellement séparé par distillation,
dans une deuxième étape, la masse réactionnelle homogène obtenue à l'étape 1 est mise à réagir en présence d'une base ainsi que d'un solvant organique insoluble dans l'eau, cette solubilité atteint au maximum 1 g de solvant par litre d'eau à température ambiante et à la pression de l'atmosphère ambiante et l'eau ainsi que le composé R¹OH sont séparés par distillation,
dans une troisième étape, la masse réactionnelle homogène obtenue à l'étape 2 est amenée à un pH entre 6 et 8 par un acide multiprotonique et/ou son sel par tamponnage, l'eau et le composé R¹OH facultativement encore présent sont séparés par distillation et le sel précipité est séparé par filtration, ainsi que
facultativement, dans une quatrième étape, la masse réactionnelle homogène obtenue à l'étape 3 est libérée du solvant organique insoluble dans l'eau.

5. Procédé suivant l'une ou plusieurs des revendications 1 à 4, caractérisé en ce que l'on utilise du cyclohexane ou du méthylcyclohexane comme solvant organique insoluble dans l'eau.

6. Procédé suivant l'une ou plusieurs des revendications 1 à 5, caractérisé en ce que, à l'étape 3, on utilise comme acide multiprotonique et respectivement, son sel, un des composés choisi parmi le groupe consistant en l'acide phosphorique, le dihydrogénophosphate de sodium et un mélange d'acide phosphorique et d'orthophosphate de sodium.

7. Procédé suivant l'une ou plusieurs des revendications 1 à 6, caractérisé en ce que le silane de formule (I) avec a égal à 0 et/ou son hydrolysat partiel et l'organo(poly)siloxane de formule (II) sont mélangés, dans une première étape, avec de l'eau et un acide polybasique, mis à réagir d'abord à 60°C, puis à la température d'ébullition de la masse réactionnelle et à une pression entre 900 et 1100 hPa, la masse réactionnelle obtenue est partiellement neutralisée avec une base et le composé R¹OH est éliminé par distillation poussée,
dans une deuxième étape, la masse réactionnelle obtenue à l'étape 1 est mise à réagir en présence d'une base et d'un solvant organique insoluble dans l'eau, cette solubilité atteint au maximum 1 g de solvant par litre d'eau à température ambiante et à la pression de l'atmosphère ambiante et simultanément, l'eau et le composé R¹OH sont séparés par distillation azéotropique à la pression de l'atmosphère ambiante jusqu'à ce que l'on atteigne la température d'ébullition du solvant organique,
dans une troisième étape, la masse réactionnelle basique obtenue à l'étape 2 est amenée à un pH entre 6 et 8 par un tampon phosphate et jusqu'à une température de 60°C et à une pression de l'atmosphère ambiante, l'eau et le composé R¹OH facultativement encore présent sont séparés par distillation azéotropique et le sel précipité est séparé par filtration où R¹ a la signification donnée précédemment, ainsi que
dans une quatrième étape, le solvant organique insoluble dans l'eau est facultativement éliminé.
